# EUROPEAN PATENT SPECIFICATION

(11) **EP 2 018 099 B1**
(45) Date of publication and mention of the grant of the patent: **06.04.2016**
(21) Application number: 07722698.3
(22) Date of filing: 11.04.2007
(51) Int. Cl.: A01K 11/00, C14B 17/00

(54) **INDIVIDUAL IDENTIFICATION SYSTEM FOR USE IN PRODUCTION OF PELTS**
IDENTIFIKATIONSSYSTEM FÜR INDIVIDUEN ZUR VERWENDUNG BEI DER HERSTELLUNG VON PELZEN
SYSTEME D'IDENTIFICATION INDIVIDUELLE POUR UNE UTILISATION DANS LA PRODUCTION DE FOURRURES

(30) Priority: 11.04.2006 DK 200600525
(43) Date of publication of application: 28.01.2009
(73) Proprietor: Dansk Mink Papir A/S, 7500 Holstebro (DK)
(72) Inventor: HEDEGAARD, Jens, 7500 Holstebro (DK)
(74) Representative: Nielsen, Henrik Sten
(86) International application number: PCT/DK2007/050043
(87) International publication number: WO 2007/115576

(56) References cited:
- EP-A1- 1 561 381
- WO-A1-00/62263
- WO-A1-03/038132
- US-A- 1 986 902
- US-A- 3 675 357
- US-A1- 2002 054 940
- US-A1- 2005 051 109

## Description

The present invention relates to an individual identification system for use in the production of pelts, namely mink pelts, where furred animals are bred and raised in cages on farms, and subsequently killed and skinned, and where the pelts are secured, stretched and dried on pelt boards (taned), removed from the pelt boards, sorted and bundled according to size and quality, after which they are sold at auctions and tanned before being processed as furs at the end-user level.

The production of pelts involves a long series of different practical work tasks for the owner of a mink farm (the breeder), which extend from the breeding work, daily operation, to skinning, drying, packaging and despatch of the dried pelts to auction houses where the pelts are sold after having been sorted according to size, colour and quality. All of these work tasks are relatively resource-demanding, with the result that the price for pelts is relatively high.

For the sake of simplicity, in the following a starting point is taken in the conditions surrounding the production of pelts on mink farms, sorting and distribution of mink pelts on mink farms and auction houses, but the application shall not be considered to be limited to precisely this type of furred animal. The invention shall thus be considered as being applicable in connection with the production of pelts in general, and solely within this trade and under the conditions which are disclosed in the preamble to claim 1.

Breeding work, including the registration of mating, the number of pups born, sickness etc. has hitherto been carried out manually, which means that it has been up to the individual breeder's evaluation, and correct registration of relevant data (data collection) has been synonymous with administrative work out at the cages on the farm, at the same time that the handling of the living mink takes place. Said registration of data concerning mating, the number of pups born, the number of surviving pups, feedstuffs consumption etc. has thus hitherto been carried out with lists drawn up manually. However, over recent years there have been developed computer programmes which, after having been keyed-in manually, can support the breeder with calculations concerning the breeding work. But the work with data collection has been considerable in order for the breeder to be able to form a reliable survey over the breeding work and its results.

Within the field of meat production and farming some systems for tracking meats and animals have been developed. The international patent application WO 03/038132 discloses a method for tracking a hide by forming a pattern of holes forming a unique identifying code. The method may be quite suitable for larger hides, such as hides from cattle and pigs. However, the method will not be suitable for living animals. Moreover, the disclosed method is highly undesired in respect of mink pelt, the product left after killing and skinning the animal. This is due to the formation of holes in the pelt which will lower the value and the price of the mink pelt.

The international patent application WO 00/62263 discloses a terminal for an active labelling system. The system is intended for use in the production of cattle for meat and milk production. The system In not intended for animals living in individual cages, contrary, the system is intended for monitoring animals living in a herd. When the animal is finally slaughtered the animal will be cut up and the cut up pieces have to be marked by use of other systems, as the active labelling system is only suitable for monitoring the living animal.

The European patent application EP 1 561 381 discloses a system for traceability of meats in which an apparatus is attached to pieces of meat after the animal has been slaughtered. The apparatus has a hanging cord intended to hang the meat products, and as such not suitable nor intended for use on living animals.

But also data concerning the daily operation, for example the registration of feedstuffs consumption, growth, behaviour, are very important factors in the evaluation of the profitability in the production of mink pelts. Up until now, the collection of this data has been registered sporadically, and therefore the figures arrived at can thus be said to be only average evaluations of, for example, a complete breeding shed with a number of cages and, in extreme cases, where the breeder has taken the necessary time for it, this can involve the of registration of feedstuffs consumption down at cage level for a smaller part of the total farm.

The registration of data concerning the pelt quality achieved, the size of the pelts, the marking of the pelts in connection with the dispatch to the auction houses is also a larger task, and here the registration of data which relates to the breeding work often ceases, since there is simply not time to carry out the registration of the individual pelts, and relate this to a given litter of pups after mating of a certain male and female, so that also here one is referred to average evaluations which then form the basis for the planning of the breeding work for the coming year.

The conclusion drawn from the above is that a great need arises for being able to carry out credible and quick registration of data concerning breeding, the general daily operation, and results achieved in the form of pelt sizes and qualities, preferably right down to single individual level on a mink farm, and thus it is the object of the present invention to provide an individual identification system for use in connection with the production of mink pelts.

This object is achieved with an individual identification system of the kind disclosed byway of introduction, wherein the individual identification system comprises a first electronically readable data media containing individual identification data (ID data), placed/moulded into a protective fastening unit which is associated with a furred animal by the securing of the fastening unit on the furred animal, for example on an extremity or in the nose of the animal, on which extremity the fastening unit with the data media remains after the killing and skinning of the animal, and which follows the pelt to the end-user level, scanning units for the scanning of the ID-data on the first data-media related to electronically recordable and manually registered individual production data, collected at relevant places and times in the production sequence for a relevant pelt, and at least a first data processing unit with interface to the scanning units for collection and processing of collected individual production data related to identification data, and wherein the individual identification system comprises centrally or decentrally at least one further data processing and control unit connected via interface with the first data processing unit, containing software which is arranged in such a manner that the outside exchange via the interface of data associated with identification data for one or more mink between the first data processing unit, effects the reading-out of a required plan of action for taking care of the mink farm and/or carries out control of the operations for selected, mechanized logistical and operational functions on an actual mink farm during breeding, growth and killing of mink provided with the first electronically readable data media containing ID-data for the actual mink, on the basis of an operation programme coded into the further data processing and control unit.

There is hereby provided an individual identification system which, with the use of scanning units placed at preferred positions, enables a quick identification of the individual mink during its life on the actual mink farm, from the time where the first electronically readable data media containing identification data (in the Following called ID-data) for breeder and individual, by the securing unit fastened on an extremity on an actual mink, at the same time that a registration of the mink's family relationship is carried out. There is hereby also created the possibility for easy and quick/automatic registration of relevant production data during the individual mink's growth period until it is killed and skinned. Since the first electronically readable data media containing ID-data remains fastened to said extremity after the killing and the skinning of the mink, there is the further possibility of being able to carry out a registration of how much an actual pelt can be stretched when carrying out the taning of the pelt before its leather side is dried, and at the same time carry out registration of the final pelt size and quality after drying and removal from the pelt board. It will be relatively simple hereafter to compare said production data collected during the growth period with data registered concerning pelt size, pelt quality and mink family relationships, whereby in a quick and very time-saving manner the breeder can form an estimate of which mink families pro- vide the best pelt qualities and sizes, and the breeder will thus be able to plan his breeding work on the basis of this information. As will also appear from the following, by distribution of ID-data for relevant pelts it will be possible to carry out a sorting of the pelts in accordance with quality and size at the auction houses to which the pelts are supplied from many, so that there is hereby achieved a more efficient mechanization of the sorting and bundling of pelts offered for sale, and the procedures for the settling of accounts between the auction houses and the breeders will also be made more efficient. The daily operation routines on a mink farm are multifarious and comprehensive, but some of the working operations connected herewith are trivial and monotonous, and which could well be mechanized providing it were possible to identify the individual mink on a farm. This is made possible by the provision of the individual identification system according to the present invention. Furthermore, the individual identification system according to the present invention makes it possible to utilize ID-data in the daily operation, whether there is talk of purely monitoring functions which, when required, are followed up with actions of some sort, or whether there is talk of a control of mechanized functions.

With the object of being able to carry out a quick localization of the position of a mink on a mink farm, the individual identification system for use in the production of mink pelts can further comprise a second electronically readable data media containing identification data which is associated with the respective cages on a relevant mink farm to provide information concerning the position of a relevant cage on a mink farm, and where said second readable data media is cooperating with the scanning units for reading of ID-data on the first data media. There is thus hereby provided a form of "national register" for the mink on the farm containing information concerning the family relationships and positioning of the respective minks on the farm.

With the object of being able to identify/register the individual mink's behaviour patterns in an actual cage, the individual identification system for use in the production of mink pelts can comprise a further scanning unit placed in the respective cages for reading of data on the first electronically readable data media, where· said scanning unit is placed in connection with a special section of the cage comprising a sluice with a first hatch at the cage's interior and a hatch which constitutes a part of the cage's outer construction, said hatches being placed at each end of the sluice and being displaceable by independently controllable actuators between an open position and a closed position, and where the scanning unit is connected via interface to the first data processing unit and/or the further data processing unit(s). By, for example, the laying out of feed at the sluice closest to the sluice's exit, and placing the further scanning unit for ID-data in the proximity of the feed, the possibility is achieved for the registration of which of the mink existing in the cage is present in the sluice (and is presumably foraging). There will here- with be the possibility of carrying out evaluations of the feed intake for each individual mink in the cages, and it will also be possible to effect a better planning of the bringing out of fresh feedstuff. Moreover, providing that the actuators which displace the ports in the sluice are connected and controlled by the further data processing unit(s), it will be possible to carry out a capturing of a certain mink by activating the actuator which is connected to the hatch towards the inside of the cage, whereby the mink is caught and ready to be fetched.

Experience has shown that pelts from female mink can not withstand the application of too much pressure from the scraping machine on the belly skin during the scraping of fat from the leather side of the pelt. Moreover, neither can said female pelts withstand the application of the same tractive force as other pelts during the maximum stretching of the pelt during the taning of the pelt on a pelt board. Moreover, in connection with the skinning of the dead female mink, there can also be a need for reducing the traction on the pelt during the skinning.

With the object of being able to pre-adjust the settings on machinery used for the skinning and scraping of the pelts, the individual identification system for use in the production of mink pelts can, via interface connection with the first data processing unit, further comprise at least a third preferably decentrally-placed data processing and control unit comprising a scanning unit placed at a cutting-up machine and/or a scraping machine in a relevant fur-processing plant for the reading of the firsdt data media's ID-data related to electronically recordable and manually registered individual production data, for the setting of the maximum permissible pressure/traction which may be applied to an actual pelt in connection with cutting-up and/or scraping of the pelt.

Regard can hereby be paid to special conditions concerning the pelts in connection with the relatively violent mechanical influences on these during the skinning of the dead mink, and also during the subsequent scraping of the pelts, so that the pelts are not damaged. Experience has shown that a pelt from a female mink can not tolerate the same mechanical influences as a pelt from a male mink.

With the object of being able to pre-adjust the maximum forces with which a relevant taning machine may apply on the pelt, the identification system, connected via interface with the first data processing unit, also comprises at least one seventh, preferably decentrally-placed data processing and control unit, comprising a scanning unit placed at a taning machine in a relevant pelt processing plant for scanning of the first data media's ID-data related to electronically recordable and manually registered individual production data. For the setting of the maximum permissible traction which may be applied to a pelt in connection with the taning of the pelt, where said seventh data processing and control unit is further connected to a sensors on the taning machine for registration of the stretching/size of an identified pelt, which data is related and associated with the first data media's ID-data and transferred via the interface to the first data processing unit for further processing.

There is hereby achieved a considerable reduction of the damages to female pelts which are stretched in the taning machine in connection with the taning of the pelt. Here it shall be mentioned that the development of new types of pelt boards, the so-called expansion pelt boards, combined with a holding bag which is drawn over the pelt stretched on the board, has had the result that the pelt, during the drying procedure for the drying of the leather side of the pelt, practically speaking does not shrink during the drying procedure. It will therefore be possible to carry out a proper certification of the taning machines, so that the pelt sizes measured during the taning procedure in reality can be used to give the pelt a size category. This will provide the possibility for the removers of the mink pelts from the pelt boards to be able, at a very earlier time, to form an estimate of the sizes and qualities of mink pelts from breeders which utilise the individual identification system and taning machines as described above. It will be obvious that with certification there shall follow a control system for ensuring that the pelt sizes measured are correct.

With the object of being able to carry out an effective control of size and quality of the dried pelts removed from the pelt boards, the individual identification system for use in the production of mink pelts can, connected via interface with the first data processing unit, further comprise at least a fourth, preferably decentrally-placed registration unit for registering the pelt size and type of a dried pelt identified by scanning of ID-data by the first data media, this mutually related data being transferred via the interface to the first data processing unit for further processing. The possibility is hereby achieved of carrying out a quick measuring and registration of the dried pelt's quality and size before it is packed for despatch to the auction house.

With the object of saving labour and achieving a simplification of the work processes in connection with the delivery of pelts to the auction house, and quickly be able to identify the incoming pelts and get them sorted, the individual identification system according to the invention can comprise an interface for transfer of combined ID-data and data for pelt type and pelt size, stemming from pelts which are delivered for sale at an auction house from a given mink farm, via interface transferred from the first data processing unit to a fifth data processing unit in an auction house, said fifth data processing unit comprising at least one, preferably several, scanning units for the scanning of the ID-data concerning the origin (mink farm) of the pelt stored on the first electronically readable data media, and recording units for recording of manually/mechanically registered data concerning the pelt quality for pelts identified at the scanning units, where said scanning and recording units are connected via interface to a sixth data processing and control unit which effects main control of mechanised logistical and bundling units for the sorting and bundling of the pelts delivered to the actual auction house.

It is hereby achieved that pelts arriving at the auction house can easily be identified, and data concerning the quality of the relevant pelts can be entered into the database and associated with other data for an actual mink pelt. As will appear, the system can thus also be used for the control of a mechanised sorting and bundling of the pelts with the same quality and colour from different breeders, and control of mechanised logistical operations in general of the pelts arriving at the auction house. This work has hitherto been carried out manually and is very labour-intensive work which, by use of the individual identification system, to a great extent can now be considerably reduced and contribute towards reducing the costs at the auction houses.

In a first embodiment of the first electronically readable data media, it is preferred that this at least contains an identification code for the relevant place of production, and an individual identification number for the relevant mink/furred animal. The identification code is thus entered into the data media beforehand and can not be changed, inasmuch as here the data media, after the reading in of the above-mentioned data, is exclusively electronically lockable by use of a reading unit.

In a further preferred embodiment of the first electronically readable data media, it is preferred that the first electronically readable data media consists of an electronically lockable/coding-in data media, which at least contains an identification code for the relevant place of production, and an individual identification number for the relevant mink/furred animal.

This will result in a more universal possibility of application of the data media, which is typically delivered in large amounts, where there will thus be the possibility to carry out the coding-in of relevant data concerning the place of production, and a number which is associated with the individual mink. It will be an obvious option here for the data which is coded-in to be secured with a blocking code, so that unauthorised access for changing of ID-data in an electronically lockable data media is prevented.

Without renouncing other embodiments of the electronically readable data media, here it can be mentioned that this can with advantage consist of an RFID chip. This distinguishes itself by being able to be produced in suitably small dimensions so that, when placed in a light ampoule, it can be placed in a holster which is small enough to make it suitable for fastening on a mink or other furred animal.

In connection with the fastening of the first electronically readable data media to an extremity on a mink, it is important that this can take place so that after the skinning of the mink the data media remains together with the pelt. Here it has shown that the fastening of the first electronically readable data media on an ear of the mink will be expedient, since the ear skin remains together with the rest of the pelt after the skinning. At the same time, trials have shown that providing that the size and weight of the light ampoule in which the data media is encapsulated can be held to a limited extent, the mink will not display any unusual behaviour after the marking. However, this also places certain demands on the fastening unit which is used to secure the data media on the mink's ear. In this connection it can be mentioned that the preferred embodiment of the protective fastening unit for the first electronically readable data media can with advantage consist of a holster with an insertion opening for accommodating and fastening of an ampoule containing a RFID chip, said holster comprising at least one substantially plane surface comprising a number of protruding spikes, the free ends of which comprise the first half of a locking mechanism which cooperates with and can be engaged in a clamping connection with a locking part associated with the fastening unit.

The possibility is hereby achieved of fastening the holster on the ear of the mink with a pair of pliers, whereby the spikes clamp through the ear skin, and thereafter carry out a final fixing of the holster by clamping the locking part on the first half of the locking mechanism on the free ends of the spikes extending out through the ear skin, after which the mink is provided with an individual ID marking.

In a further preferred embodiment of the fastening unit associated with the individual identification system, the substantially plane surface on the protective fastening unit can further comprise at least one guide pin oriented in the same direction as the spikes. It is hereby achieved that the holster does not turn after being fastened, but remains in the same position on the extremity (the ear) of the mink.

Without renouncing choice of other materials, it can be mentioned that the holster and the locking part which constitutes the protective fastening unit can with advantage be elongated and be made of a suitable plastic material, for example polypropylene. It will be obvious that since the mink is a predator with sharp teeth, and endowed with a strong biting function, a suitable plastic material should have characteristics such as hardness in the surface and a certain toughness to give it strength.

With the invention there is disclosed an effectively-working individual identification system for use within the production of mink pelts, and which will result in much needed, more effective and improved breeding work, on the basis of registered key data concerning size and quality of the pelts, and which will also provide further possibilities for optimisation of part of the daily operations on the mink farm, and more effective operations and work processes at the auction houses where the mink pelts are sorted and sold.

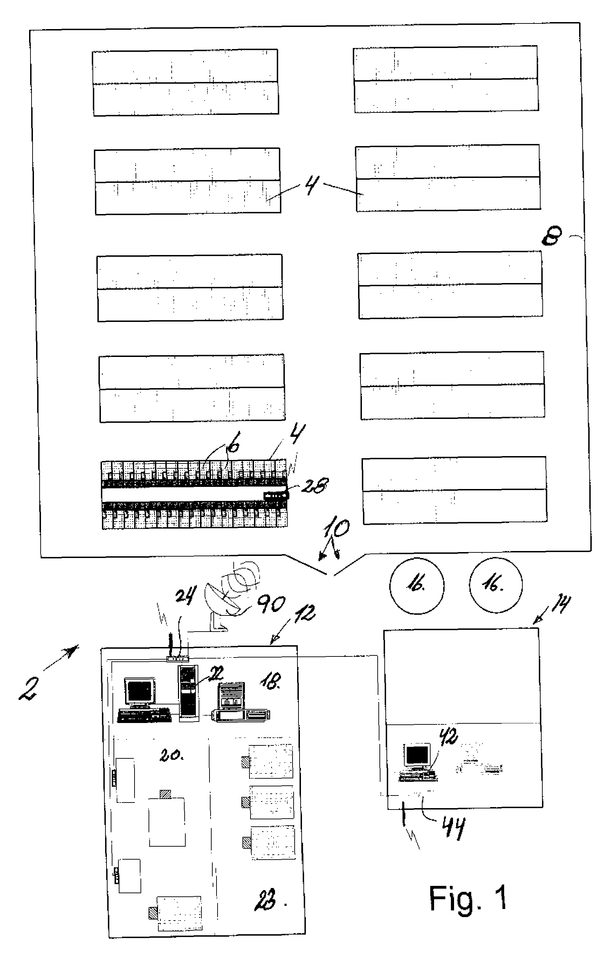

In the following, the invention is explained in more detail with reference to the drawing, where
Fig. 1 is a stylised plan view of a mink farm, where the roof has been removed from one of the breeding sheds so that the cages can be seen, and where collection and transmission of ID-data collected by mounting of the first electronically readable data media on the ear of a mink placed in the cages to a central data processing unit containing breeding data etc., and to the further data processing unit(s), which on the basis of a software reader programme for taking care of the mink farm (activity report), and with indication of interface between the further processing unit(s) and a station for mechanised functions on the mink farm, according to the invention.
Fig. 2 is a detail drawing of a breeding shed with the roof removed.
Fig. 3 is a detail drawing of a mink cage with ID-chip for localising the position of the cage on the farm, comprising a sluice with mechanical hatches and a scanning unit for the scanning of the first electronically readable data media placed on the ear of a mink.
Fig. 4 is picture of a mink with one of its ears provided with a first electronically readable data media containing individual identification data (ID-data) placed in a protective fastening unit.
Fig. 5 illustrates a pelt processing plant comprising a scraping machine and a taning machine with reader unit, and third data processing unit for registering of pelt ID and the pressure on the scraper machine's rollers and traction on the taning machine, registration of the pelt size and interface to the first data processing unit.
Fig. 6 is an illustration of data connection and possible routines in connection with the use of the ID-tag by transmission and sorting of pelts at auction houses.
Fig. 7A and 7B show an exploded perspective view of a first embodiment of a first electronically readable data media seen respectively at an angle from above and at an angle from the side, together with a protective fastening unit for accommodating the electronically readable data media, and the fastening of this on an extremity of a mink according to the invention.
Fig. 8A and 8B show the same as in fig. 7A and 7B, but in the assembled state, though with the difference that fig. 8B is seen at an angle from below.

In fig. 1 is shown a stylised plan view of a mink farm, where the roof has been removed from one of the breeding sheds 4 so that the cages 6 can be seen. The breeding sheds 4 are separated from the rest of the farm by a fence 8, and there is access to the farm via a gate 10, as will appear from fig. 1.

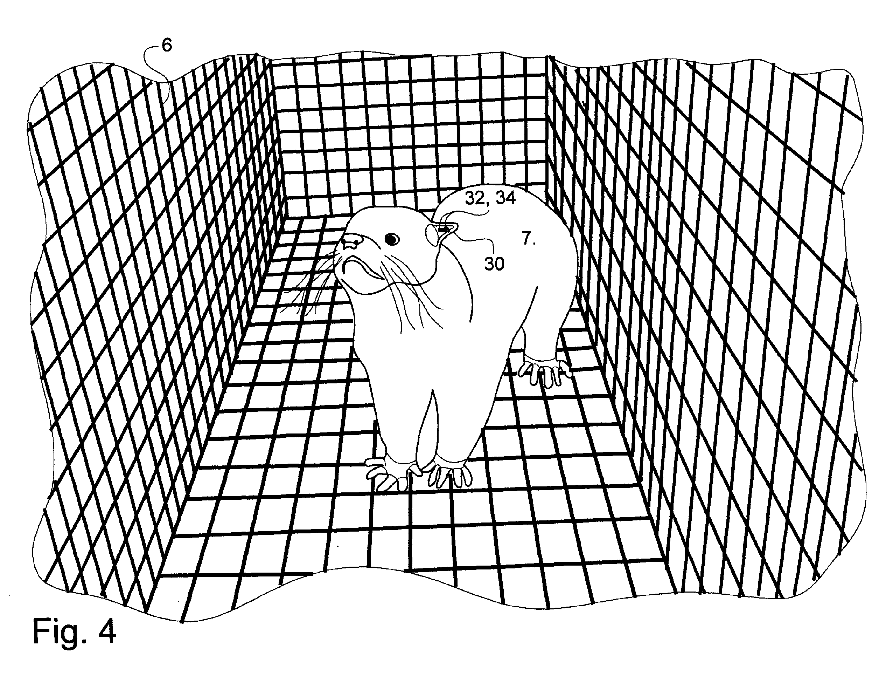

Outside the fence 8 there are shown two building 12, 14 and two circles which represent upstanding feedstuff tanks 16 for the storage of feedstuff for the feeding of the mink 7 (cf. fig. 4) in the cages 6. The first building 12 comprises an operator room 18, a pelt processing plant 20 and a drying room for taned mink pelts (not shown). The second building 14 is an operations building which is used in connection with the daily care and operation of the mink farm.

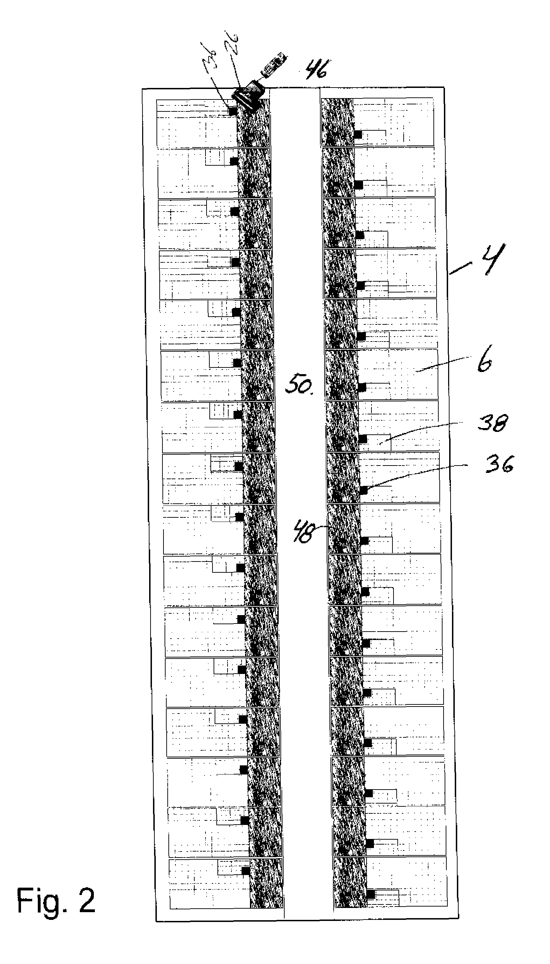

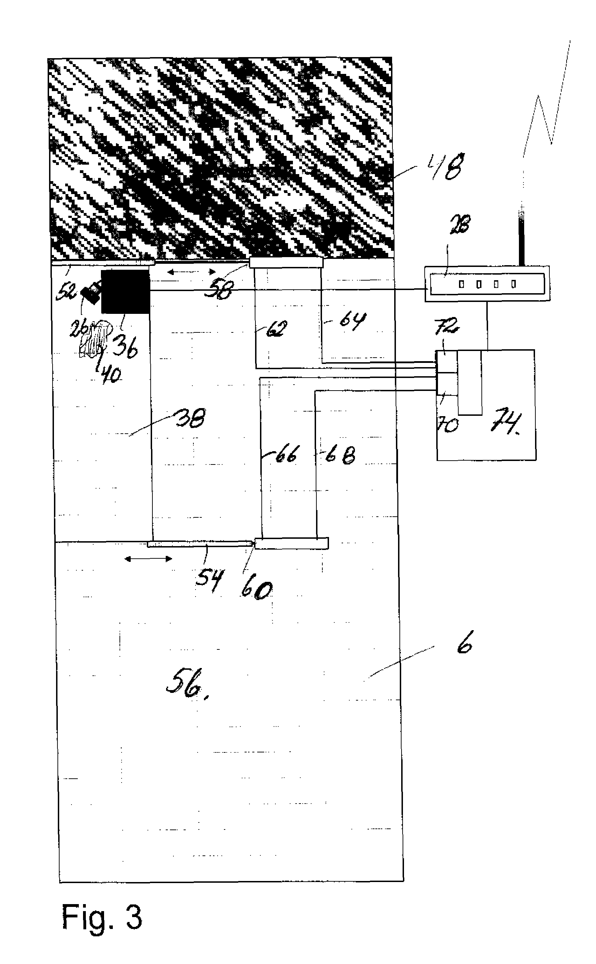

In the operator room 18 there is a central data processing unit 22 which forms a part of the individual identification system according to the invention for use in the production of mink pelts. The central data processing unit 22 contains breeding data, genealogical tables etc. for the mink 7 existing in the cages 6 in the mink farm. In the embodiment shown the central data processing unit 22 is via interface 24 coupled in a wireless manner with reader units 26 (see fig. 2 and fig. 3) via interface 28 placed in the respective breeding sheds 4. On an extremity of each mink 7, typically the mink's ear 30 (cf. fig. 4), there is mounted a first electronically readable data media 32 (in the following called the first data media) containing identification data (in the following called ID-data) for the actual mink, placed in a protective fastening unit 34 which will be described in more detail later. The first data media 32 can, for example, consist of an ampoule containing an RFID-chip, and is coded with data which as a minimum contains the identification number for the relevant mink farm and an identification number for the actual mink 7. Here it shall already be mentioned that the RFID-chip's electronically readable data media can either be of the ROM type or of the R/W type, the latter so that a part of the ID-data which is to be found on the first data media 32 can be read into a writer unit arranged for this purpose (not shown), though after previous entering of an authorisation code.

When being set out in the farm's cages 6, which takes place after removal from the mother animals, the mink 7 are provided with protective fastening units 34 containing the first data media 32 containing identification data. The fastening unit 34 with the first data media 32 follows the relevant mink 7 not only until it is killed and skinned, but also afterwards until the relevant mink's pelt reaches out to the end user (the furrier who processes the pelts into furs).

With the use of the reader units 26 at the respective cages 6 in the breeding sheds 4 for the scanning of data on the first data media, the possibility is thus provided, in a hitherto unseen, quick and easy manner, to carry out an individual registration of production data for each mink's pattern of behaviour, including eating habits, growth, possible sicknesses, well-being, behaviour etc., all of which is data of great importance for the breeding work and the profitability of the relevant farm. For the sake of good order it shall be mentioned that the registration of said data has hitherto been connected with manual work, combined with keyboard work and subsequent reporting of data to a data processing unit, which for reasons of resources and time consumption has up until now resulted in a very summary and overriding registration of production data for use in connection with the breeding work, and the breeding work has thus hitherto been laborious work.

Each single cage 6 is also provided with a second electronically readable data media 36 (in the following called the second data media) which also belongs to the individual identification system according to the invention. The second data media 36 is readable in the same way as the first data media. In this way it will be possible to locate the placing of the individual mink on the farm, which is important not only in connection with the handling of the mink, but also in connection with the daily operation of the mink farm.

Since collection and transmission of ID-data stemming from the respective mink in the farm's cages 6 by said technique can only take place if the distance between the first data media 32 and a relevant mink's ear 30 and the reader unit is relatively short (here there is envisaged a distance shorter than approx. 10-15 cm, in certain cases between 0 and 5 cm), it will be necessary to regulate the minks' behaviour in the cages during the growth period, so that hereby there is the possibility of carrying out registration of the frequency of feedstuff intake etc.

To the individual identification system there is therefore associated a special sluice 38 in the cages 6 where the reader units 26 are placed, cf. fig. 3. By placing the feedstuff 40 close to the reader units in the feeding of the feeding the mink 7, when they eat their feed they will be forced to move into the sluice 38 to be able to consume the feed which is placed on top of the cage's grid construction. It will hereby be possible to register which mink enters the sluice, and when and how frequently it does so. Since the mink will hardly stay in the sluice without reason, its presence in the sluice can be assumed to be that it is eating its feed. By means of the reader units 26 it will thus be possible to be able to collect data concerning the individual feedstuff intake, which as a consequence of the individual marking of each mink 7 in the cages 6, the presence of the mink in the sluices can be registered by the reader units 26, and this data is sent via interface for registration in the central data processing unit 22, where it is registered an calculated how frequently an actual mink consumes feedstuff, and a calculated intake of the amount of feed, which later by control weighing of the mink can be related to a feed utilisation percentage, which in turn can form part of the breeding planning for which mink family's litter best utilise the feedstuff and give the greatest growth per feedstuff unit.

In certain cases said collected data concerning the foraging frequency for the individual mink on the farm, and the knowledge of which cages the mink are placed in, can be sent via an additional interface 44 to a further data processing unit 42 placed in the operations building 14, said further data processing unit 42 containing software which on the basis of said data prints out the action programme for the care of the mink farm (activity report). In certain cases the action programme can also be included in the control of mechanised operations on the mink farm.

It shall be mentioned that data concerning feedstuff consumption can also be collected by hand-held terminals, such as indicated in fig. 2, where data, for example via a mobile telephone 46, is transferred in a wireless manner to the first data processing unit 22, and or to the second data processing unit 42 in the operations building 14. In fig. 2 it is also shown how the cages 6 can be placed in a breeding shed 4, with nesting boxes 48 placed nearest to the shed's centre gangway 50. It shall be mentioned that the inventor has realised that the transfer of data between cages, breeding sheds to the first data processing unit 22 can be implemented in ways other than those described here, and the disclosed methods of data transmission shall generally be taken to be examples of how data can be transferred, and thus must not be considered to place limitations on the invention.

As will appear from fig. 3, which is detail picture of a cage 6 comprising a sluice 38, which is a part of the system which together constitute the individual identification system, the cage comprises a reader unit 26 for scanning of the first data media 32 which is fastened to each individual mink, and containing ID-data for the relevant mink 7 which resides in the relevant cage 6. The cage 6 also comprises a second electronically readable data media 36 which indicates the number of the cage, which is registered in the first and the second data processing unit 22, 42 together with indication of which breeding shed 4 an actual cage 6 is to be found. The reader unit 26 is coupled to an interface 28 which, in the shown embodiment, transfers the scanned data in a wireless manner to the first data processing unit 22, and in certain cases also to the second data processing unit 42 in the operations building 14. As will also appear, the sluice 38 comprises hatches 52, 54 respectively placed between the inside 56 of the cage where the mink 7 are normally reside when they are not foraging, and between the sluice's opposite end and the gangway 50. In the shown embodiment, said hatches 52, 54 are arranged in a displaceable manner and are each connected to their pneumatically-driven plunger 58, 60 which, via pressure pipes 62, 64, 66, 68 are connected to valves 70, 72 in a control unit 74 which is connected to the interface 28. Access to the sluice 38 can hereby be regulated, so that a mink 7 which is required to be weighed can automatically be isolated from the remaining mink in the cage 6 by the scanning unit registering the presence of the relevant mink in the sluice 38, after which the first or the second data processing unit 22, 24 sends a signal to the interface 28 to indicate that the hatch 52 shall be slid over the opening between the sluice and the inside 56 of the cage, by activation of the valve 70 via the control unit 74 where pressure is applied to the plunger. The relevant mink is hereby shut up in the sluice 38 ready to be fetched/weighed. When the relevant mink 7 shall subsequently be taken out of the cage 6, this can be done by the sending of a signal to the control unit 74, either via the interface 28 or directly, so that the hatch 54 is slid aside by activation of the valve 72. It will be very important that the positions of the hatches 52, 54 are indicated by position signal transmitters (not shown), which via the control unit 74 and the interface 28 send information concerning the position of the hatches to the first or the second data processing unit 22, 42, which carry out the control of the positions of the hatches so that both hatches must never be opened at the same time, in that this would result in the mink in the cages being able to escape. As shown in fig. 3, the cages 6 according to the invention will be an effective means of help not only in connection the daily operation of the mink farm, where from time to time a control weighing of the mink takes place in order to determine growth, (see above in connection with the discussion concerning breeding work), but also in connection with the breeding work itself, where male mink are moved from cage to cage with the view to mating with the female mink. The sluice facilitates the work of the capture of a relevant mink 7 which, when it has been shut up in the sluice 38, can easily be removed from the sluice, and it can also easily be put back in a cage in the same way.

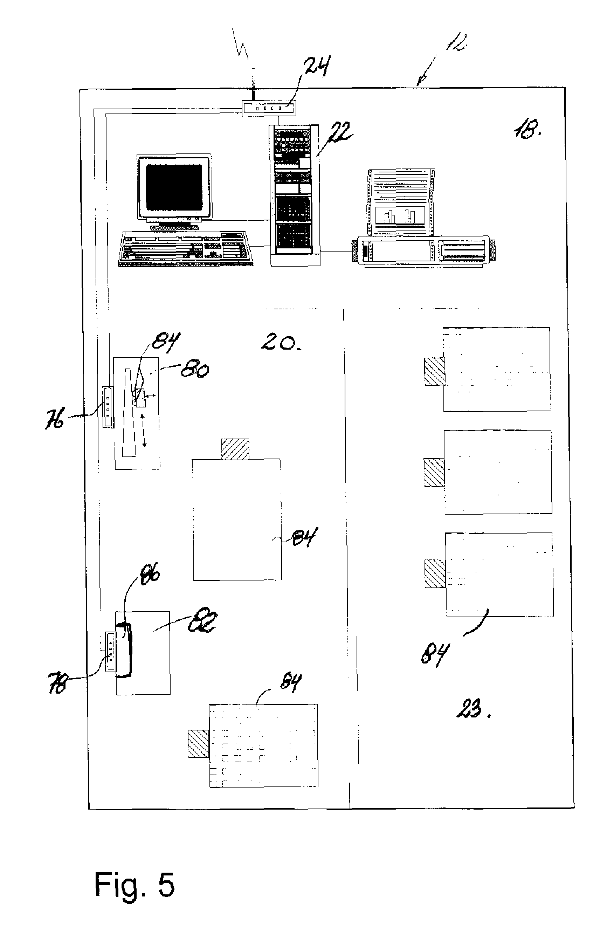

Fig. 5 is a close-up picture of the building 12, comprising the operator room 18, pelt processing plant 20 and drying room 23. As will appear from fig. 5, the first data processing unit 22 is connected via the interface 24 to a number of decentrally-placed data processing and control units 76, 78, here comprising interface and reader units (not shown) for the scanning of ID-data on the first data media 32 on the pelts for identification of the relevant pelt, and control electronics for controlling some of the functions respectively on a scraping machine 80 for scraping the fat from the leather side of the pelt, and a taning machine 83 for the taning of the pelts on expansion pelt boards (not shown, cf. PCT/DK2004/000619) after the fat has been removed, which are thereafter placed in upright position in the drying aggregates 84 which, when these have been filled, are wheeled into the drying room 23 where the leather sides of the taned pelts are dried by the blowing of conditioned air into the cavity in the pelt board.

In the scraping of pelts from female mink, experience has shown that these pelts, if they are exposed to the same pressure from the scraping machine's rollers 84 as that applied to male pelts, will split or be damaged with a consequent reduction of the price obtainable at a subsequent auction. With the individual identification system, it is possible to identify female pelts as these arrive at the scraping machines 80, and after identification of the pelt has taken place by the first data processing unit 22, a signal is sent via the interface 24 to the control unit 76 concerning which type of pelt is involved, after which the software residing in the control unit 76 carries out an individual adjustment of the pressure of the scraping rollers against the leather side of the relevant pelt, whereby the pelt is not damaged during the scraping away of the fat.

As will also appear from fig.5, the taning machine 82, where the stretching of the pelts from which the fat has been scraped takes place on expansion pelt boards, is similarly connected to a data processing and control unit 78. Here, the control unit 78 also serves to control the maximum traction that the taning machine 82 shall apply to an actual pelt, for example a female pelt. But the control unit 78 is also connected to the control unit 86 which controls the normal functions of the taning machine, and which also comprises measuring material (not shown) for measuring the size to which a pelt identified by scanning of the first data media is transferred by the control unit 78 from the taning machine's control unit 86, and is transferred via the interface 24 to the first data processing unit 22. Since the size of the pelt on the pelt board and dried on expansion pelt boards does not change to any noteworthy extent, in that these pelt boards effectively secure the pelts in the stretched position by means of overdrawn holding bags or by wrapping, the possibility is hereby provided of undertaking a registration in the first data processing unit of the pelt size expected to be achieved at a much earlier time than has hitherto been the case. Moreover, it also becomes possible to carry out precise evaluations of the breeding work in relation to a wide number of production and quality parameters, such as pelt size, quality etc., hereby making the production of the pelts more efficient. Hereafter, on the basis of collected individual production data associated with the individual mink pelt, reports can be written out concerning production results already achieved, and proposals for genealogical tables for future generations of mink families, whose offsprings' pelts are expected to be able to reach the greatest sizes by taning, best quality etc., at the same time that these better utilise the amount of supplied feedstuff. It can thus be claimed without any doubt that introduction of the individual identification system for use in the production of mink pelts according to the invention is a particularly great step forward for the mink fur farming industry.

With the use of the individual identification system according to the invention it will also be possible, after the taning of the pelts (after drying of the leather side of the pelts), to carry out a quick spot check of the degree to which the pelt sizes registered from a given taning machine are correct, in that it is possible by the implementation of a spot check to relate the stretching and measuring of the size of the pelts to a given taning machine, and in cases where deviation between the pelt sizes actually achieved and the pelt sizes measured by the taning machine lie outside the approval criteria, it will be necessary to carry out correction/calibration of the relevant taning machine's measuring equipment so that it can again fulfil the criteria for the carrying out of credible pelt sizes. For the spot check of achieved pelt sizes, use is not necessarily made of stationary reader units - hand-held reader units combined with keyboards for entering the size categories for the measured pelts, for example combined with wireless data transfer to the interface 24 at the first data processing unit, will often be sufficient.

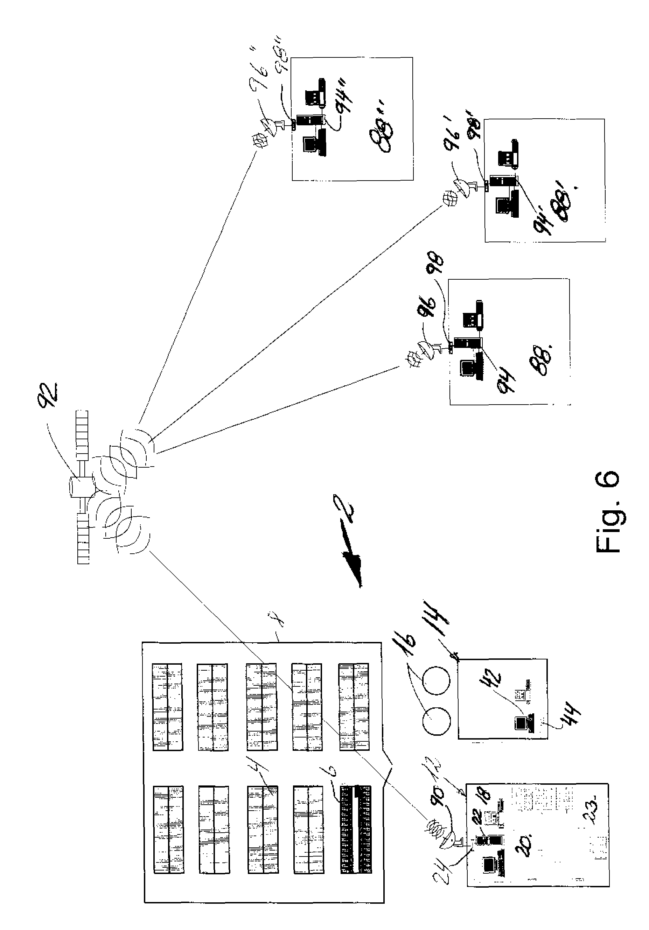

In fig. 6, the mink farm shown in fig. 1 is depicted in a principle sketch together with three different auction houses 88, 88', 88" which can be placed in any geographical place. As is shown in fig. 6, the interface 24 is connected to a satellite antenna 90 which, via a satellite 92, is able to transfer relevant individual data concerning the mink pelts produced on a relevant mink farm, which are intended for sale via one or more of the auction houses 88, to the data processing units 94, 94',94" at said auction houses via satellite antennae 96, 96', 96", and herewith associated interface 98, 98', 98". In the first place this eases the work of the pelt breeder, inasmuch as he does not need, as hitherto has been the case, to insert a tag in each pelt with indication of the origin of the pelt, its size category, colour, quality etc., in that individual data registration is effected by means of the first electronically readable media 32. But it also means that it will be possible for the respective buyers of the pelts at said auction houses to be able at an early time to form an impression of the amount and quality of the total amount of pelts which are put up for sale via the auction houses, and thus have the possibility of bidding for precisely the quality, colour, types and size of mink pelts for which there is need. In other words, open the individual identification system according to the invention for a more globalised trade with mink pelts, instead of being concentrated around one or two auction houses. All else being equal, this propagation of data will result in the possibility of achieving better prices for pelts on the world market.

It shall be mentioned that the interface, mode of data transmission and associated hardware in general which is shown for transfer of data between the respective data processing units, can be implemented in ways other than those shown in the drawing and described above. The interface/hardware/data transmission described shall thus be understood to be examples, and shall not be considered as limitations of the invention.

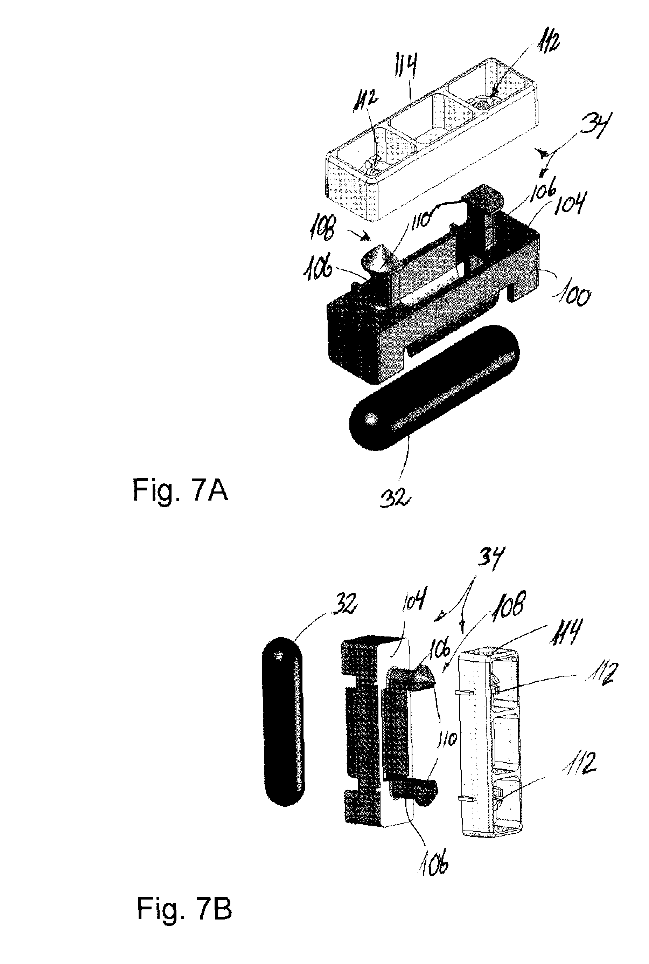

Fig. 7A and fig. 7B are exploded perspective drawings of first data media 32 and the protective fastening unit 34, seen at an angle from above and at an angle from the front. The protective fastening unit 34 consists of two parts, a holster 100 with an opening 102 for the introduction of the first data media 32 in the form of an ampoule containing an RFID-chip. The holster 100 comprises at least one plane surface 104 comprising a number of protruding spikes 106, the free ends 108 of which comprise the first half-part 110 of a locking mechanism which cooperates with and can engage in clamping connection 112 with a locking part 114 associated with the fastening unit.

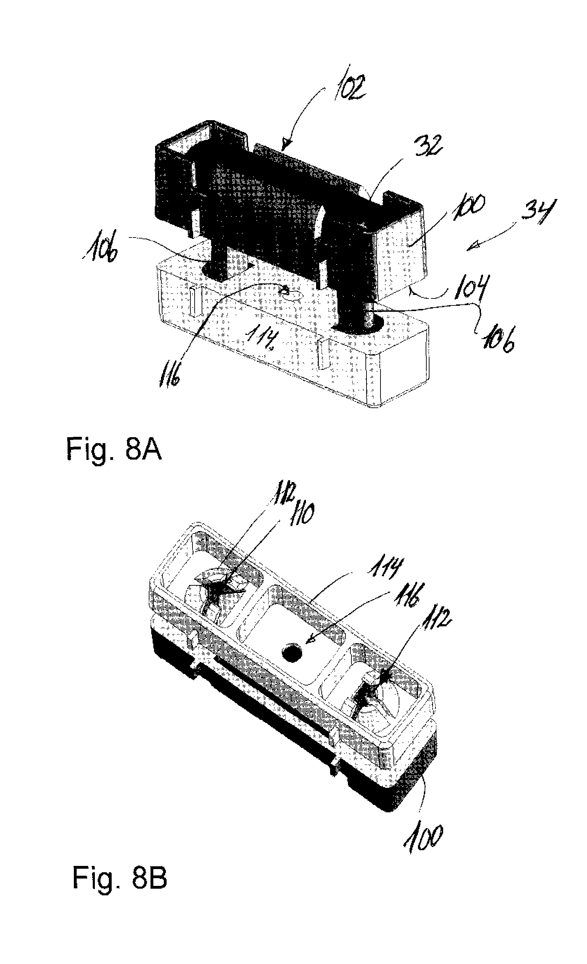

Fig. 8A and fig. 8B show the fastening unit 34 shown in fig. 7A and fig. 7B in the assembled state, where the first half-part 110 of the locking mechanisms on the free ends of the spikes 106 are inserted into and locked in clamping connections 112 in the locking part 114.

In a not-shown embodiment, the substantially plane surface 104 on the holster 100 can further comprise at least one guide pin oriented in the same direction as the spikes 106, and as will appear from fig. 8A and fig. 8B the locking part 114 can be provided with an opening 116 for receiving said guide pin.

It shall be mentioned that the holster 100 and the locking part 114 which constitute the protective fastening unit 34 can be produced in one operation of a light material, in that the fastening unit is typically secured in the mink's ear 30 (cf. fig.4), and at the same time the material shall be able to protect the ampoule 32 containing the first data media against being bitten etc. Without renouncing the use of other suitable materials, it can be mentioned that the fastening unit can with advantage consist of polycarbonate.

In conclusion it shall be mentioned that the inventor has recognised that the individual identification system for use in the production of mink can assume embodiments other than those disclosed in the above, but this does not change the fundamental inventive aspect which lies in being able in an easy manner to carry out relatively cheap identification marking of a mink when it is set out in cages for growth, and hereby be able to carry out continuous registration of data concerning growth, feedstuff consumption, behaviour and, after the killing of the mink, the subsequently achieved pelt size, whereby said data can form a greatly improved basis for the implementation of an efficiently functioning breeding work, where it is recorded which mink families provide the best pelt qualities and the largest pelts for least possible use of resources, data which has hitherto been very difficult to collect. Moreover, great savings can be achieved with the invention inasmuch as the work of sorting the pelts at auction houses can be considerably reduced, which will form the basis for not insignificant savings for both the producers/breeders as well as buyers, furriers and end users.

It shall also be mentioned the ID-marking is obviously very useful in the detection of the origin of mink which have escaped. In several places, mink which have escaped constitute a threat to a series of interests from the point of view of nature, in that mink are predators which by nature are well qualified for the killing of other animal species in order to obtain food. Consequently, in accordance with the law, mink farmers are obliged to ensure that their mink do not escape from the farms, but sometimes accidents occur where mink escape anyway to the detriment of the remaining nature. Great efforts are therefore made to capture mink which have escaped, and the work involved herewith is relatively costly. Moreover, it has hitherto been just as difficult after the catching of an escaped mink to determine which farm it has escaped from. This has now been made possible with the individual identification system for use in the production of mink according to the invention.

## Claims

1. Individual identification system for use in the production of pelts, namely mink pelts, where the furred animals (7) are bred and raised in cages (4) on farms (2) and subsequently killed and skinned, and where the pelts are taned, dried, removed from the taning boards and bundled in accordance with size and quality, afterwhich they are sold by auction and tanned before being processed into furs, wherein the individual identification system comprises a first electronically readable data media (32) containing individual identification data (ID-data) placed in or moulded into a protective fastening unit(34)which isassociatedwithafurred animal (7) by fastening of the fastening unit (34) on the furred animal (7), for example on an extremity or in the nose of the animal (7), on which extremity the fastening unit (34) with the data media (32) remains after the killing and the skinning of the animal, and follows the pelt to the end-user level, scanning unit (26) for reading of ID-data on the first data media (32) related to electronically readable and manually registered individual production data, collected at relevant places and times in the course of production of a relevant pelt, and at least one first data processing unit(22)with interface (24) for the scanning units (26) for collection and processing of collected individual production data related to identification data, and wherein the individual identification system comprises at least one centrally or de-centrally placed further data processing and control unit (42) connected via interface (24, 44) with the first data processing unit (22) and containing software which is arranged in such a manner that on the basis of the exchange of data between the first data processing unit (22), associated identification data for one or more mink, via interface implements the reading out of a required plan of action for taking care of the mink farm and/or effects the control of the operations for selected mechanized, logistical and operational functions on an actual mink farm, during the breeding, growth and killing of mink provided with the first electronically readable data media (32), containing individual identification data for the relevant mink, on the basis of an operation programme coded into the further data processing and control unit.

2. Individual identification system for use in the production of pelts according to claim 1 wherein the individual identification system further comprises a second electronically readable data media (36) containing identification data which is associated with the respective cages (4) on a relevant minkfarm (2), for indication of the position of a relevant cage on the mink farm, and where said second readable data media cooperates with the scanning units for reading of ID-data on the first data media (32).

3. Individual identification system for use in the production of pelts according to claim 2, wherein the cages (4) further comprise a scanning unit (26) for reading of data on the first electronically readable data media (32), where said scanning unit (26) is placed in connection with a special section of the cage comprising a sluice (38) with a first hatch (54) on the inside (56) of the cage and a second hatch (52) which constitutes a part of the outer limit of the cage, where said hatches (52, 54) are placed at each their ends of the sluice (38), and by independent actuators (58, 60) are displaceable between an open position and a closed position, and where via interface (28, 24, 44) the scanning unit (26) is connected to the first data processing unit (22) and/or the further data processing unit(s) (42).

4. Individual identification system for use in the production of pelts according to any of the claims 1-3, wherein the individual identification system is connected via interface with the first data processing unit and wherein the individual identification system further comprises at least a third, preferably decentrally placed data processing and control unit (76) comprising a scanning unit placed at a cutting-up machine and/or a scraping machine (80) in a relevant pelt processing plant (20), for the reading of the first data media's ID-data related to electronically recordable and manually registered individual production data for setting of the maximum permissible traction which may be applied to a pelt in connection with the cutting-up or the scraping of the pelt.

5. Individual identification system for use in the production of pelts according to any of the claims 1-4, wherein the individual identification system is connected via interface with the first data processing unit, it further comprises at least a seventh, preferably decentrally placed data processing and control unit (78) comprising a scanning unit placed at a taning machine (82) in a relevant pelt processing plant (20) for the reading of the first data media's ID-data related to electronically recordable and manually registered individual production data for the setting of the maximum permissible traction which may be applied to an actual pelt in connection with the taning of the pelt, and where said seventh data processing and control unit (78) is further connected to sensors provided an a taning machine (82) for registering of the stretching ability/size of an identified pelt, which data is related and associated with the first data media's ID-data and is transferred via the interface (78, 24) to the first data processing unit (22) for further processing.

6. Individual identification system for use in the production of pelts according to any of the claims 1-5, wherein the individual identification system is connected via interface (24) with the first data processing unit (22) it further comprises at least a fourth, preferably decentrally placed registration unit for registering pelt size and type of a dried pelt identified by scanning of ID-data on the first data media, this mutually related data being transferred via the interface to the first data processing unit (22) for further processing.

7. Individual identification system for use in the production of pelts according to any of the claims 1-6, wherein the combined ID-data and data for pelt type and size stemming from pelts delivered for sale in an auction house (88. 88'. 88") from a given mink farm (2), is transferred via interface (24,90,92, 96, 98, 96', 98',96", 98") from the first data processing unit (22) to a fifth data processing unit (94, 94', 94") in an auction house (88, 88', 88"), said fifth data processing unit comprising at least one but preferably several scanning units for reading of the ID-data stored on the first electronically readable data media concerning the origin (mink farm) of the pelt, and units for the reading-in of manually/mechanically registered data concerning the quality of pelts identified by the scanning units, where said scanning units and reader units are connected via interface to a sixth data processing and control unit which effects main control of the mechanized logistical and bundling units for the sorting and bundling of the pelts delivered to the actual auction house.

8. Individual identification system for use in the production of pelts according to any of the claims 1-7, wherein the first electronically readable data media (32) consists of an electronically readable data media which at least contains an identification code for the relevant place of production, and an individual identification number for the relevant furred animal (7).

9. Individual identification system for use in the production of pelts according to any of the claims 1-8, wherein the first electronically readable data media (32) consists of an electronically readable data media which at least contains an identification code for the relevant place of production, and an individual identification number for the relevant furred animal (7).

10. Individual identification system for use in the production of pelts according to any of the claims 1- 9, wherein the first electronically readable data media (32) consists of an RFID-chip.

11. Individual identification system for use in the production of pelts according to any of the claims 1-10, wherein the protective fastening unit (34) for the electronically readable data media (32) consists of a holster (100) with an opening (102) for the introduction and fastening of an ampoule containing an RFI D-chi p, said holster (100) comprising at least one substantially plane surface (104) comprising a number of protruding spikes (106), the free ends of which (108) comprise the first half-part (110) of a locking mechanism which cooperates with and can be engaged in a clamping connection (112) in a locking part (114) associated with a fastening unit (34).

12. Individual identification system for use in the production of pelts according to claim 11, the substantially plane surface (104) on the protective fastening unit further comprises at least one guide pin oriented in the same direction as the spikes (106).

13. Individual identification system according to claim 11 or 12, wherein the holster (100) and the locking part (114) which constitute the protective fastening unit (34) is elongated and of a suitable plastics material, for example polycarbonate.

14. Individual identification system according to any of the claims 1-10, wherein the protective fastening unit for the first electronically readable data media consists of a tag, the one end of which comprises a fastening part intended for fastening to an extremity on a furred animal, and the other end of which comprises a part in which the first electronically readable data media is integrated.

## Patentansprüche

1. Identifikationssystem für Individuen zur Verwendung bei der Herstellung von Pelzen, insbesondere Nerzpelzen, wobei die Pelztiere (7) in Käfigen (4) auf Farmen (2) gezogen und aufgezogen sind und nachträglich getötet und gehäutet werden, und wobei die Pelze gegerbt, getrocknet, von den Gerbbrettern entfernt und nach Größe und Qualität gebündelt werden, wonach sie durch Versteigerung verkauft und gegerbt werden, bevor sie zu Pelzen verarbeitet werden, wobei das Identifikationssystem für Individuen ein erstes elektronisch lesbares Datenmedium (32) umfasst, das individuelle Identifikationsdaten (ID-Daten) enthält, die in einer Schutzbefestigungseinheit (34) angeordnet oder in diese geformt sind, die mit einem Pelztier (7) verbunden ist durch Befestigung der Befestigungseinheit (34) an dem Pelztier (7), zum Beispiel an einer Extremität oder in der Nase des Tiers (7), an welcher Extremität die Befestigungseinheit (34) mit dem Datenmedium (32) nach der Tötung und der Häutung des Tiers verbleibt, und den Pelz an das Ebene des Endkunden begleitet, Abtasteinheit (26) zum Lesen von ID-Daten auf dem ersten Datenmedium (32) in Bezug auf elektronisch lesbare und manuell registrierte individuelle Produktionsdaten, die an relevanten Orten und zu relevanten Zeitpunkten im Laufe der Produktion eines relevanten Pelzes gesammelt sind, und mindestens eine erste Datenverarbeitungseinheit (22) mit einer Schnittstelle (24) für die Abtasteinheiten (26) zum Sammeln und Verarbeiten von gesammelten individuellen Produktionsdaten in Bezug auf Identifikationsdaten, und wobei das Identifikationssystem für Individuen mindestens eine zentral oder dezentral angeordnete weitere Datenverarbeitungs- und Steuereinheit (42) umfasst, die über eine Schnittstelle (24, 44) mit der ersten Datenverarbeitungseinheit (22) verbunden ist und Software enthält, die in einer solchen Weise angeordnet ist, dass auf Basis des Austauschs von Daten zwischen der ersten Datenverarbeitungseinheit (22), assoziierte Identifikationsdaten für einen oder mehrere Minke, über eine Schnittstelle das Auslesen eines geforderten Aktionsplans zum Betreuen des Nerzfarms implementieren und/oder die Steuerung der Operationen für ausgewählte mechanisierte, logistische und operationelle Funktionen auf einem tatsächlichen Nerzfarm durchführen, während der Zucht, des Wachstums und der Tötung von Nerzen, versehen mit dem ersten elektronisch lesbaren Datenmedium (32), enthaltend individuelle Identifikationsdaten für den relevanten Mink, auf Basis eines Betriebsprograms, die in die weitere Datenverarbeitungs- und Steuereinheit kodiert sind.

2. Identifikationssystem für Individuen zur Verwendung bei der Herstellung von Pelzen nach Anspruch 1, wobei das Identifikationssystem für Individuen ferner ein zweites elektronisch lesbares Datenmedium (36) umfasst, das Identifikationsdaten enthält, die mit den jeweiligen Käfigen (4) auf einer relevanten Nerzfarm (2) verbunden sind, zur Anzeige der Position eines relevanten Käfigs auf dem Nerzfarm, und wobei das zweite lesbare Datenmedium mit den Abtasteinheiten zum Lesen von ID-Daten auf dem ersten Datenmedium (32) zusammenarbeitet.

3. Identifikationssystem für Individuen zur Verwendung bei der Herstellung von Pelzen nach Anspruch 2, wobei die Käfige (4) ferner eine Abtasteinheit (26) zum Lesen von Daten auf dem ersten elektronisch lesbaren Datenmedium (32) umfasst, wobei die Abtasteinheit (26) in Verbindung mit einem speziellen Abschnitt des Käfigs angeordnet ist, umfassend eine Schleuse (38) mit einer ersten Luke (54) auf der Innenseite (56) des Käfigs und einer zweiten Luke (52), die einen Teil der äußeren Grenze des Käfigs bildet, wobei die Luken (52, 54) an jedem ihrer Enden der Schleuse (38) angeordnet sind, und durch unabhängige Betätigungselemente (58, 60) zwischen einer offenen Position und einer geschlossenen Position verstellbar sind, und wobei die Abtasteinheit (26) über eine Schnittstelle (28, 24, 44) mit der ersten Datenverarbeitungseinheit (22) und/oder der/den weiteren Datenverarbeitungseinheit(en) (42) verbunden ist.

4. Identifikationssystem für Individuen zur Verwendung bei der Herstellung von Pelzen nach einem der Ansprüche 1-3, wobei das Identifikationssystem für Individuen über eine Schnittstelle mit der ersten Datenverarbeitungseinheit verbunden ist, und wobei das Identifikationssystem für Individuen ferner mindestens eine dritte, bevorzugt dezentral angeordnete Datenverarbeitungs- und Steuereinheit (76) umfasst, umfassend eine Abtasteinheit, die an einer Aufschneidmaschine und/oder einer Schabevorrichtung (80) in einer relevantem Pelzverarbeitungsanlage (20) angeordnet ist, zum Lesen der ID-Daten des ersten Datenmediums in Bezug auf elektronisch beschreibbare und manuell registrierte individuelle Produktionsdaten zum Festsetzen des maximalen zulässigen Zugs, der auf einen Pelz in Verbindung mit dem Aufschneiden oder dem Schaben des Pelzes aufgebracht werden kann.

5. Identifikationssystem für Individuen zur Verwendung bei der Herstellung von Pelzen nach einem der Ansprüche 1-4, wobei das Identifikationssystem für Individuen über eine Schnittstelle mit der ersten Datenverarbeitungseinheit verbunden ist, es ferner mindestens eine siebente, bevorzugt dezentral angeordnete Datenverarbeitungs- und Steuereinheit (78) umfasst, umfassend eine Abtasteinheit, die an einer Gerbanlage (82) in einer relevanten Pelzverarbeitungsanlage (20) angeordnet ist, zum Lesen der ID-Daten des ersten Datenmediums in Bezug auf elektronisch beschreibbare und manuell registrierte individuelle Produktionsdaten zum Festsetzen des maximalen zulässigen Zugs, der auf einen tatsächlichen Pelz in Verbindung mit der Gerbung des Pelzes aufgebracht werden kann, und wobei die siebente Datenverarbeitungs- und Steuereinheit (78) ferner mit Sensoren verbunden ist, die an einer Gerbanlage (82) zum Erfassen der Dehnungsfähigkeit/Größe eines identifizierten Pelzes vorgesehen sind, welche Daten mit den ID-Daten des ersten Datenmediums verbunden und assoziiert und über die Schnittstelle (78, 24) an die erste Datenverarbeitungseinheit (22) zur Weiter-verarbeitung übertragen werden.

6. Identifikationssystem für Individuen zur Verwendung bei der Herstellung von Pelzen nach einem der Ansprüche 1-5, wobei das Identifikationssystem für Individuen über eine Schnittstelle (24) mit der ersten Datenverarbeitungseinheit (22) verbunden ist, es ferner mindestens eine vierte, bevorzugt dezentral angeordnete Erfassungseinheit zur Erfassung von Pelzgröße und Typ eines getrockneten Pelzes identifiziert durch Abtasten von ID-Daten auf dem ersten Datenmedium umfasst, wobei diese gegenseitig bezogenen Daten über die Schnittstelle an die erste Datenverarbeitungseinheit (22) zur Weiterverarbeitung übertragen wird.

7. Identifikationssystem für Individuen zur Verwendung bei der Herstellung von Pelzen nach einem der Ansprüche 1-6, wobei die kombinierten ID-Daten und Daten für Pelztyp und Größe herrührend von Pelzen, die zur Veräußerung in einem Versteigerungshaus (88. 88'. 88") von einer gegebenen Nerzfarm (2) geliefert sind, über eine Schnittstelle (24,90,92, 96, 98, 96', 98',96", 98") von der ersten Datenverarbeitungseinheit (22) an eine fünfte Datenverarbeitungseinheit (94, 94', 94") in einem Versteigerungshaus (88, 88', 88") übertragen werden, wobei die fünfte Datenverarbeitungseinheit mindestens eine, aber bevorzugt mehrere Abtasteinheiten zum Lesen der ID-Daten umfasst, die auf dem ersten elektronisch lesbaren Datenmedium betreffend den Ursprung (Nerzfarm) des Pelzes gespeichert sind, und Einheiten zum Einlesen von manuell/mechanisch registrierten Daten über die Qualität von Pelzen, die von den Abtasteinheiten identifiziert sind, wobei die Abtasteinheiten und Leseeinheiten über eine Schnittstelle mit einer sechsten Datenverarbeitungs- und Steuereinheit verbunden sind, die Hauptkontrolle der mechanisierten logistischen und Bündelungseinheiten für das Sortieren und Bündeln der Pelze durchführt, die an das tatsächliche Versteigerungshaus geliefert sind.

8. Identifikationssystem für Individuen zur Verwendung bei der Herstellung von Pelzen nach einem der Ansprüche 1-7, wobei das erste elektronisch lesbare Datenmedium (32) aus einem elektronisch lesbaren Datenmedium besteht, das mindestens einen Identifikationscode für den relevanten Herstellungsort und eine individuelle Identifikationsnummer für das relevante Pelztier (7) enthält.

9. Identifikationssystem für Individuen zur Verwendung bei der Herstellung von Pelzen nach einem der Ansprüche 1-8, wobei das erste elektronisch lesbare Datenmedium (32) aus einem elektronisch lesbaren Datenmedium besteht, das mindestens einen Identifikationscode für den relevanten Herstellungsort und eine individuelle Identifikationsnummer für das relevante Pelztier (7) enthält.

10. Identifikationssystem für Individuen zur Verwendung bei der Herstellung von Pelzen nach einem der Ansprüche 1-9, wobei das erste elektronisch lesbare Datenmedium (32) aus einem RFID-Chip besteht.

11. Identifikationssystem für Individuen zur Verwendung bei der Herstellung von Pelzen nach einem der Ansprüche 1-10, wobei die Schutzbefestigungseinheit (34) für das elektronisch lesbare Datenmedium (32) aus einem Holster (100) mit einer Öffnung (102) für die Einführung und Befestigung einer Ampulle besteht, die einen RFID-Chip enthält, wobei das Holster (100) mindestens eine im Wesentlichen ebene Oberfläche (104) umfasst, umfassend eine Anzahl hervorstehender Spikes (106), deren freie Enden (108) den ersten Halbabschnitt (110) eines Verriegelungsmechanismus umfasst, der mit einer Klemmverbindung (112) in einem Verriegelungsteil (114) zusammenarbeitet und damit in Eingriff gebracht werden kann, der mit einer Befestigungseinheit (34) verbunden ist.

12. Identifikationssystem für Individuen zur Verwendung bei der Herstellung von Pelzen nach Anspruch 11, wobei die im Wesentlichen ebene Oberfläche (104) auf der Schutzbefestigungseinheit ferner mindestens einen Führungsstift umfasst, der in der gleichen Richtung wie die Spikes (106) ausgerichtet ist.

13. Identifikationssystem für Individuen nach Anspruch 11 oder 12, wobei das Holster (100) und der Verschlussteil (114), welche die Schutzbefestigungseinheit (34) bilden, länglich ist und aus einem geeigneten Kunst-stoffmaterial, zum Beispiel Polycarbonat, besteht.

14. Identifikationssystem für Individuen nach einem der Ansprüche 1-10, wobei die Schutzbefestigungseinheit für das erste elektronisch lesbare Datenmedium aus einem Etikett besteht, dessen eines Ende ein Befestigungsteil umfasst, das für Befestigung an einem Extremität an einem Pelztier vorgesehen ist, und dessen anderes Ende ein Teil umfasst, in welches das erste elektronisch lesbare Datenmedium integriert ist.

## Revendications

1. Système d'identification individuelle pour utilisation dans la production de peaux, à savoir les peaux de visons, où les animaux à fourrure (7) sont élevés dans des cages (4) dans des fermes (2) et ensuite tués et écorchés, et où les peaux sont tannées, séchées, retirées des planches de tannage et empaquetées conformément à la taille et la qualité, après quoi elles sont vendues aux enchères et tannées avant d'être transformées en fourrures, où le système d'identification individuelle comprend un premier média de données lisible électroniquement (32) contenant des données d'identification individuelles (des données d'identification) placées dans une unité de fixation protectrice (34) ou moulées dans celle-ci qui est associée avec un animal à fourrure (7) par fixation de l'unité de fixation (34) sur l'animal à fourrure (7), par exemple sur une extrémité ou dans le nez de l'animal (7), sur quelle extrémité l'unité de fixation (34) avec le média de données (32) reste après l'abattage et l'écorchage de l'animal, et suit la peau au niveau utilisateur final, l'unité de scannage (26) pour la lecture des données sur le premier média de données (32) associé à des données de production individuelles registrées manuellement et électroniquement lisibles, qui sont collectionnées à des emplacements et des moments pertinents en cours de la production d'une peau pertinente, et au moins une première unité de traitement de données (22) avec interface (24) pour les unités de scannage (26) pour la collection et le traitement de données de production individuelles collectionnées associées aux données d'identification, et où le système d'identification individuel comprend au moins une unité ultérieure (42) de contrôle et de traitement de données placée de manière centralisée ou décentralisée, connectée par interface (24, 44) avec la première unité de traitement de données (22) et contenant du logiciel qui est disposé de telle manière que la base d'échange de données entre la première unité de traitement de données (22), des données d'identification associées pour au moins un vison, mettant en oeuvre par interface la lecture d'un plan d'action requis pour prendre soin de la ferme de visons et/ou ont un effet sur le contrôle des opérations pour des fonctions mécanisées, logistiques et opérationnelles sélectionnées dans une ferme de vison concrète, pendant l'élévation, la croissance et l'abattage de visons fournies avec le premier média de données lisible électroniquement (32), contenant des données d'identification individuelles pour le vison en question, sur la base d'un programme d'opération codé dans une unité de contrôle et de traitement de données ultérieure.

2. Système d'identification individuelle pour utilisation dans la production de peaux selon la revendication 1, où le système d'identification individuelle comprend en outre un deuxième média de données lisible électroniquement (36) contenant des données d'identification qui sont associées avec les cages respectives (4) dans une ferme de visons pertinente (2), pour indication de la position d'une cage pertinente à la ferme de visons, et où ledit deuxième média de données lisible coopère avec les unités de scannage pour la lecture des données d'identification sur le premier média de données (32).

3. Système d'identification individuelle pour utilisation dans la production de peaux selon la revendication 2, où les cages (4) comprennent en outre une unité de scannage (26) pour la lecture des données sur le premier média de données lisible électroniquement (32), où ladite unité de scannage (26) est placée en connexion avec une section spéciale de la cage comprenant une vanne (38) avec une première écoutille (54) sur l'intérieur (56) de la cage et une deuxième écoutille (52) qui constitue une partie de la limite extérieure de la cage, où lesdites écoutilles (52, 54) sont placées à chacune de leurs extrémités de la vanne (38), et par des actionneurs indépendants (58, 60), elles sont déplaçables entre une position ouverte et une position fermée, et où, par interface, (28, 24, 44), l'unité de scannage (26) est connectée à la première unité de traitement de données (22) et/ou la/les unité(s) de traitement de données ultérieure(s) (42).

4. Système d'identification individuelle pour utilisation dans la production de peaux selon l'une quelconque des revendications 1 à 3, où le système d'identification individuelle est connecté par interface avec la première unité de traitement de données et où le système d'identification individuelle comprend en outre au moins une troisième unité de contrôle et de traitement de données (76) qui de préférence est placée de manière décentralisée, comprenant une unité de scannage placée à une machine de découpage et/ou une machine à gratter (80) dans une usine de transformation de peau pertinente (20), pour la lecture des données d'identification du premier média de données, associées à des données de production individuelles registrées manuellement afin de fixer la traction maximale permis qui peut être appliquée à une peau en connexion avec le découpage ou le grattage de la peau.

5. Système d'identification individuelle pour utilisation dans la production de peaux selon l'une quelconque des revendications 1 à 4, où le système d'identification individuelle est connecté par interface avec la première unité de traitement de données, il comprend en outre au moins une septième unité de contrôle et de traitement de données (78) qui est placée de préférence de manière décentralisée, comprenant une unité de scannage placée sur une machine de tannage (82) dans une usine de transformation de peau pertinente (20) pour la lecture des données d'identification du premier média de données associées aux données de production individuelles registrées manuellement et enregistrables électroniquement afin de fixer la traction maximale permise qui peut être appliquée à une peau en connexion avec le tannage de la peau, et où ladite septième unité de contrôle et de traitement de données (78) est en outre connectée à des capteurs fournis sur une machine de tannage (82) pour registrer la capacité d'étirement/la taille d'une peau identifiée, lesquelles données sont relatées et associées avec les données d'identification du premier média de données et transférées par l'interface (78, 24) à une première unité de traitement (22) pour traitement ultérieur.

6. Système d'identification individuelle pour utilisation dans la production de peaux selon l'une quelconque des revendications 1 à 5, où le système d'identification individuelle est connecté par interface (24) avec la première unité de traitement de données (22), il comprend en outre au moins une quatrième unité d'enregistrement, placée et de préférence de manière décentralisée, pour registrer la taille de la peau et le type de peau séchée identifié par scannage d'identification de données sur le premier média de données, ces données relatées mutuellement étant transférées par l'interface à la première unité de traitement de données (22) pour traitement ultérieur.

7. Système d'identification individuelle pour utilisation dans la production de peaux selon l'une quelconque des revendications 1 à 6, où les données d'identification et les données du type et de taille de peau combinées à l'origine de peaux livrées pour la vente dans une maison d'enchères (88, 88', 88") venant d'une ferme de visons donnée (2), sont transférées par interface (24, 90, 92, 96, 98, 96', 98', 96", 98") à partir de la première unité de traitement de données (22) à une cinquième unité de traitement de données (94, 94', 94") dans une maison de vente aux enchères (88, 88', 88"), ladite cinquième unité de traitement de données comprenant au moins une, mais de préférence plusieurs unités de scannage pour la lecture de données d'identification mise en mémoire sur le premier média de données lisible électroniquement concernant l'origine (ferme de visons) de la peau, et des unités pour la lecture de données enregistrées manuellement/mécaniquement concernant la qualité des peaux identifiées par les unités de scannage, où lesdites unités de scannage et les unités de lecture sont connectées par interface à une sixième unité de contrôle et de traitement de données qui exerce une commande principale des unités empaquetées et logistiquement mécanisées pour le tri et l'empaquetage des peaux livrées à la maison de vente aux enchères actuelle.

8. Système d'identification individuelle pour utilisation dans la production de peaux selon l'une quelconque des revendications 1 à 7, où le premier média de données lisible électroniquement (32) consiste en un média de données lisible électroniquement qui contient au moins un code d'identification pour le lieu pertinent de production, et un numéro d'identification individuel pour l'animal à fourrure pertinent (7).

9. Système d'identification individuelle pour utilisation dans la production de peaux selon l'une quelconque des revendications 1 à 8, où le premier média de données lisible électroniquement (32) consiste en un média de données lisible électroniquement qui contient au moins un code d'identification pour le lieu pertinent de production, et un numéro d'identification individuel pour l'animal à fourrure pertinent (7).

10. Système d'identification individuelle pour utilisation dans la production de peaux selon l'une quelconque des revendications 1 à 9, où le premier média de données lisible électroniquement (32) consiste en une puce RFID.

11. Système d'identification individuelle pour utilisation dans la production de peaux selon l'une quelconque des revendications 1 à 10, où l'unité de fixation protectrice (34) pour le premier média de données lisible électroniquement (32) consiste en un étui (100) avec une ouverture (102) pour l'introduction et la fixation d'une ampoule contenant une puce RFID, ledit étui (100) comprenant un moins une surface substantiellement plane (104) comprenant un nombre de pointes en saillie (106), dont les extrémités libres (108) comprennent la première demi-part (110) d'un mécanisme de verrouillage qui coopère avec une liaison de serrage (112) et peut engrener avec celle-ci dans une partie de verrouillage (114) associée avec une unité de fixation (34).

12. Système d'identification individuelle pour utilisation dans la production de peaux selon la revendication 11, la surface substantiellement plane (104) sur l'unité de fixation protectrice comprenant en outre une tige de guidage orientée dans la même direction que les pointes (106).

13. Système d'identification individuelle pour l'utilisation dans la production de peaux selon l'une des revendications 11 ou 12, où l'étui (100) et la partie de verrouillage (114) qui constituent l'unité de fixation protectrice (34) sont élongés et faits d'une matière plastique convenable, par exemple du polycarbonate.

14. Système d'identification individuelle pour l'utilisation dans la production de peaux selon l'une quelconque des revendications 1 à 10, où l'unité de fixation protectrice pour le premier média de données lisible électroniquement consiste en une étiquette, dont une extrémité comprend une partie de fixation qui est destiné à être fixée sur une extrémité d'un animal à fourrure, et dont l'autre extrémité comprend une partie dans laquelle le premier média de données lisible électroniquement est intégrée.
